# EUROPÄISCHE PATENTANMELDUNG

(11) **EP 3 206 272 A1**
(43) Veröffentlichungstag der Anmeldung: **16.08.2017**
(21) Anmeldenummer: 17155963.6
(22) Anmeldetag: 14.02.2017
(51) Int. Cl.: H02G 11/02, B65H 75/44

(54) **KABELAUFROLLVORRICHTUNG**

(30) Priorität: 15.02.2016 DE 102016202294
(71) Anmelder: ATHOS Holding GmbH, 75438 Knittlingen (DE)
(72) Erfinder: EHLERT, Rainer, 75433 Maulbronn (DE)
(74) Vertreter: Pfiz, Thomas

(57) **Zusammenfassung**

Die Erfindung betrifft eine Kabelaufrollvorrichtung zum Aufrollen eines Elektrokabels, das einen ersten elektrischen Steckverbinder (26) an seinem ersten Ende und einen zweiten elektrischen Steckverbinder (1) an seinem zweiten Ende umfasst, mit einer Kabeltrommel (9,21) zum Aufnehmen des Elektrokabels als wenigstens eine Kabelwicklung, wobei der zweite Steckverbinder (1) fest mit der Kabeltrommel (9,21) verbunden ist. Um den Bedienungskomfort zu erhöhen, werden ein Gehäuse (25) zur Drehlagerung der Kabeltrommel (9,21), ein elektrischer Antriebsmotor (23) zum Erzeugen einer Drehbewegung der Kabeltrommel (9,21) gegenüber dem Gehäuse (25) und eine in dem Gehäuse (25) integrierte und über das Elektrokabel (10) gespeiste Stromversorgung (22,33) für den Antriebsmotor (23) vorgeschlagen.

## Beschreibung

Die Erfindung betrifft eine Kabelaufrollvorrichtung zum Aufrollen eines Elektrokabels nach dem Oberbegriff von Anspruch 1.

Bei herkömmlichen aufrollbaren Netzkabeln ist die Trommel mit einer Feder ausgestattet und mit Schleifkontakten oder anders gearteten Kontakten, die eine Drehdurchführung des Anschlusskabels auf eine Steckdosenplatte oder Steckdose ermöglichen. In einfacheren Versionen dreht sich die Steckdosenplatte mit, und es ist auch keine Feder zum Aufrollen vorgesehen. Bei den mitdrehenden Steckdosen werden die Schleifringkontakte eingespart. Nachteilig ist dann, dass bei einer Veränderung der Leitungslänge alle Geräte ausgesteckt werden müssen.

Der Erfindung liegt die Aufgabe zugrunde, einen hohen Komfort beim Auf- und Abrollen eines Kabels bei gleichzeitig hoher Bedienungssicherheit und erweitertem Gebrauchsnutzen zu gewährleisten.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, eine Kabeltrommel in einem Gehäuse mit einem elektrischen Motorantrieb auszustatten. Erfindungsgemäß wird vorgeschlagen, dass ein Gehäuse zur Drehlagerung der Kabeltrommel, ein elektrischer Antriebsmotor zum Erzeugen einer Drehbewegung der Kabeltrommel gegenüber dem Gehäuse um eine Trommelachse und eine in dem Gehäuse integrierte und über das Elektrokabel gespeiste Stromversorgung für den Antriebsmotor vorgesehen sind.

Die Stromversorgung für den Motor kann somit über den ohnehin vorhandenen Stromanschluss mit Strom gespeist bzw. mit Energie versorgt werden. Dies lässt sich ohne besonderen Zusatzaufwand bewerkstelligen. Unter Elektrokabel ist hier vornehmlich ein mit einem Stromversorgungsnetz verbindbares Netzkabel, aber auch andere Leitungen, wie Daten-, Signal- und Steuerkabel zu verstehen.

Ein besonderer Vorteil liegt auch darin, dass die elektrische Aufwicklung prinzipiell keine Längenbegrenzung bedingt, im Unterschied zu einer Aufwickelfeder, wo bei zunehmender Länge das Einlaufen sehr unkontrolliert wird. Noch ein weiterer Vorteil liegt darin begründet, dass nur eine geringe Kraft aufgewendet werden muss, um das Elektrokabel aus dem Gehäuse der Kabeltrommel herauszuziehen. Gleichzeitig ist ein komfortables Aufrollen auf Knopfdruck möglich.

Vorteilhafterweise weist die Stromversorgung einen in dem Gehäuse eingebauten Akku auf. Dadurch ist ein Motorbetrieb auch bei ausgestecktem Elektrokabel möglich, so dass dieses motorisch aufgerollt werden kann.

Eine weitere vorteilhafte Ausführung sieht vor, dass die Stromversorgung eine in dem Gehäuse angeordnete Ladeelektronik aufweist, und dass die Ladelektronik mit dem ersten Steckverbinder und mit dem Akku elektrisch verbunden oder verbindbar ist. Auf diese Weise kann eine automatische Aufladung erfolgen, ohne dass eine Entnahme des Akkus und dessen Einsetzen in eine gesonderte Ladeschale erforderlich wäre.

Eine weitere Verbesserung sieht vor, dass das Elektrokabel über ein insbesondere durch Schleifkontakte gebildetes bewegliches Kontaktsystem mit dem zweiten elektrischen Steckverbinder elektrisch verbunden ist. Damit kann der zweite Steckverbinder in einer drehfesten Orientierung verbleiben, so dass die eingesteckten Geräte bei einer Veränderung der aufgerollten Kabellänge nicht ausgesteckt werden müssen.

In diesem Zusammenhang ist es schaltungstechnisch von Vorteil, wenn die Stromversorgung für den Antriebsmotor einen zwischen dem Kontaktsystem und dem zweiten elektrischen Steckverbinder abzweigenden Strompfad aufweist.

In einer weiteren vorteilhaften Ausführung weist die Kabeltrommel eine stirnseitige Trommelscheibe auf, mit welcher der Antriebsmotor vorzugsweise über ein Zahnradgetriebe gekoppelt ist. Somit kann bei kleinem Durchmesser eines Antriebsritzels ohne großen Aufwand ein Untersetzungsgetriebe zur Drehmomentsteigerung realisiert werden.

Vorteilhafterweise ist der Antriebsmotor über einen Taster betätigbar, wobei der Taster an dem Gehäuse angeordnet ist. Dadurch ist gewährleistet, dass nur bei betätigtem Taster der Antriebsmotor dreht, während beim Loslassen des Tasters sofort Stillstand eintritt. Somit kann ein hoher Bedienungskomfort und zugleich die erforderliche Bedienungssicherheit gewährleistet werden.

Eine weitere Verbesserung des Bedienungskomforts ergibt sich dadurch, dass alternativ oder ergänzend zu einem Taster eine Fernbedienung vorgesehen ist, die die Funktion eines Tasters übernimmt.

Um das Kabel kompakt aufzunehmen und Blockaden zu verhindern, ist es von Vorteil, wenn eine integrierte Aufrolleinheit zum gleichmäßigen Wickeln des Elektrokabels auf die Kabeltrommel vorgesehen ist.

Eine weitere Sicherheitsverbesserung ergibt sich dadurch, dass der zweite Steckverbinder mit einem integrierten Thermo-Schutzschalter gesichert ist.

Zur Erhöhung des Gebrauchsnutzens ist es von Vorteil, wenn in das Gehäuse ein USB-Anschluss zum Laden von Mobilgeräten und/oder eine Ladestation für Akku-Geräte integriert ist.

Weitere Merkmale und Vorteile der Erfindung ergeben sich aus der folgenden Beschreibung von bevorzugten Ausführungsformen, bei der auf die beigefügte Zeichnung Bezug genommen wird.
- Fig. 1: zeigt eine Ausführungsform der erfindungsgemäßen Kabeltrommel als Explosionszeichnung.
- Fig. 2: zeigt die Kabeltrommel mit Gehäuse in geöffnetem Zustand.
- Fig. 3: zeigt die Kabeltrommel mit Gehäuse in geschlossenem Zustand.
- Fig. 4: zeigt ein Blockschaltbild Ausführungsform der erfindungsgemäßen Kabeltrommel mit einer Rangfolge von Sicherheitseinrichtungen.

Die in der Zeichnung gezeigte Vorrichtung umfasst ein Elektrokabel in Form eines Netzkabels 10, das mit einem ersten elektrischen Steckverbinder 26 und einem zweiten elektrischen Steckverbinder 1 an seinen beiden Enden elektrisch verbunden ist. In der gezeigten Ausführungsform ist der erste Steckverbinder 26 ein einfacher Schutzkontakt-Netzstecker und der zweite elektrische Steckverbinder 1 eine 4-fach-Steckdosenplatte. Weiterhin umfasst die Aufrollvorrichtung ein Gehäuse 25, das eine rechte Gehäuseschale 2 sowie eine linke Gehäuseschale 19 aufweist. In dem Gehäuse 25 ist eine aus einer rechten Trommelscheibe 9 und einer linken Trommelscheibe 21 zusammengesetzte Kabeltrommel 27 gelagert.

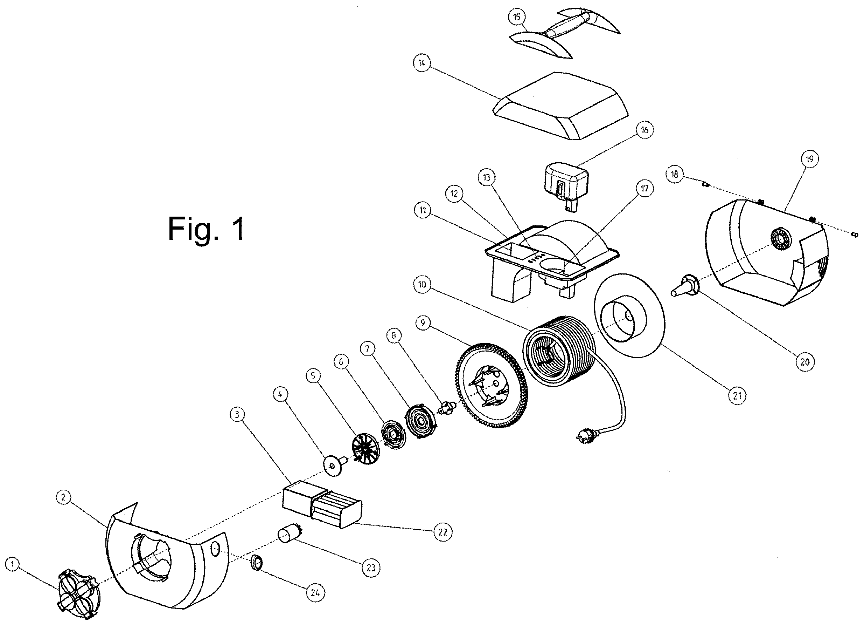

Wie aus Fig. 1 ersichtlich, verläuft durch das Gehäuse 25 eine Drehachse der Kabeltrommel 27, auf die sich die weitere Beschreibung bei der Angabe von relativen Positionen und Bewegungen bezieht. Der in Fig. 1 gestrichelt gezeigte Achsverlauf wird bestimmt durch zwei Bauteile "Achsteil rechts" 4 und "Achsteil links" 20.

Die Drehdurchführung des Netzkabels 10 auf die drehfest in dem Gehäuse 25 gehaltene Steckdosenplatte 1 wird durch ein bewegliches Kontaktsystem für die Anschlusslitzen des Netzkabels 10 umfassend Kontaktfedern 6 und Schleifringe 7 sichergestellt. Diese sind durch einen rechten und linken Gehäusekäfig zusammengehalten und mittels Lagerring 8 auf der Achse 4, 20 zentriert.

Die rechte Trommelscheibe 9 ist umfangsseitig mit einem Zahnkranz versehen, der mit einem Ritzel des Antriebsmotors 23 kämmt. Zur Stromversorgung des Motors 32 ist ein Akku 22 vorgesehen, der über ein Netzteil 3 aufladbar ist.

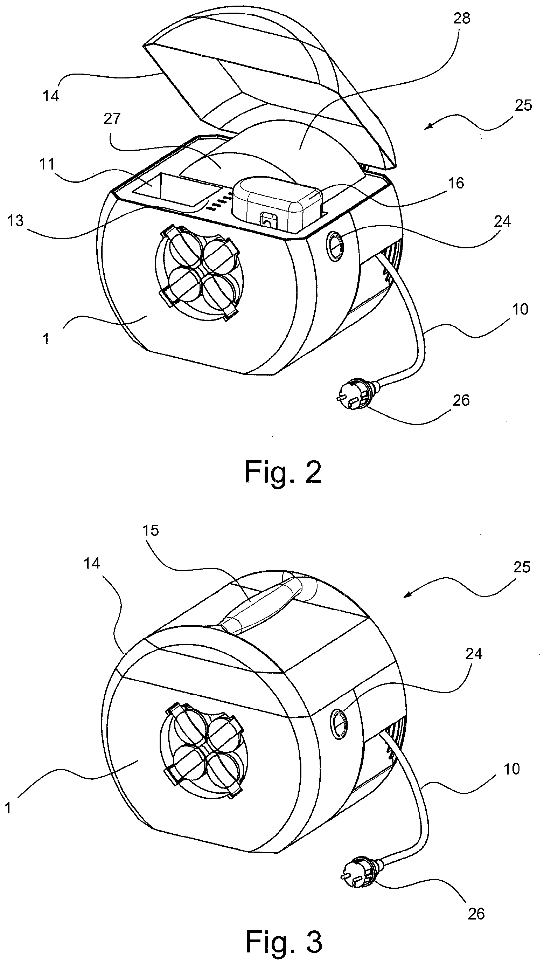

Fig. 2 zeigt das geöffnete Gehäuse 25. Dieses weist einen Stauraum 11 in einer Abdeckung 12 auf. Die Abdeckung 12 bietet weiterhin Platz für USB-Steckdosen 13 zum Aufladen von Mobilgeräten. Die USB-Steckdosen sind mit dem Netzteil 3 verbunden, so dass sie ein angeschlossenes externes Gerät betreiben und/oder aufladen können. Diese und weitere in der Abdeckung integrierte Einrichtungen werden durch einen Deckel 14 vor Verschmutzung und Beschädigung geschützt. Zur besseren Handhabung der Vorrichtung ist ein Griff 15 an der Abdeckung 12 vorgesehen.

Zweckmäßig dient die Abdeckung auch zur Aufnahme eines Werkzeugakkus 16, der in einer Ladebucht 17 über das Netzteil 3 geladen wird. Die Abdeckung 12 ist über einen Scharnierzapfen 18 mit einer linken Gehäuseschale 19 des Gehäuses 25 verbunden, so dass die Abdeckung aufgeklappt werden kann, um z.B. den Werkzeugakku zu entnehmen.

Auf dem linken Achsteil 20 sitzt die linke Trommelscheibe 21, die das Gegenstück zu der rechten Trommelscheibe 9 bildet. Damit ist das Gehäuse 25 für die Kabeltrommel 27 abgeschlossen.

Zum Aufwickeln des Netzkabels 10 wird die Kabeltrommel 27 relativ zu dem Gehäuse 25 durch den elektrischen Antriebsmotor 23 gedreht. Die Stromversorgung des Motors 23 umfasst einen aufladbaren Akku 22, der fest in das Gehäuse 25 integriert ist. Der Akku 22 wird durch das Netzteil 3 aufgeladen, wobei das Netzteil als parallel zu der Steckdosenplatte 1 geschalteter Verbraucher über das Netzkabel 10 mit Strom versorgt wird.

Bestromt wird der Motor 23 für den elektrischen Kabelrückzug durch Betätigung eines Tasters 24. Dieser Knopf bzw. Taster 24, der extern an dem Gehäuse 25 bedienbar ist, muss zum Motorbetrieb kontinuierlich gedrückt werden. Dies erfolgt aus Sicherheitsgründen, um zu vermeiden, dass durch einen einmaligen Tastimpuls die Aufrollbewegung ohne Unterbrechung fortläuft.

In Fig. 3 ist das aufklappbare Gehäuse 25 für die elektrische Kabelaufrollvorrichtung im geschlossenen Zustand gezeigt. Bei geschlossenem Gehäusedeckel 14 lässt sich die Kabelaufrollvorrichtung bequem an dem stabilen Tragegriff 15 des Gehäuses transportieren. Der Gehäusedeckel 14 ist dabei mit einer (nicht gezeigten) Verrieglung in dem geschlossenen Zustand gesichert. Damit bleiben lediglich der erste Steckverbinder 26 des Netzkabels 10 und die Steckdosenplatte 1 zugänglich.

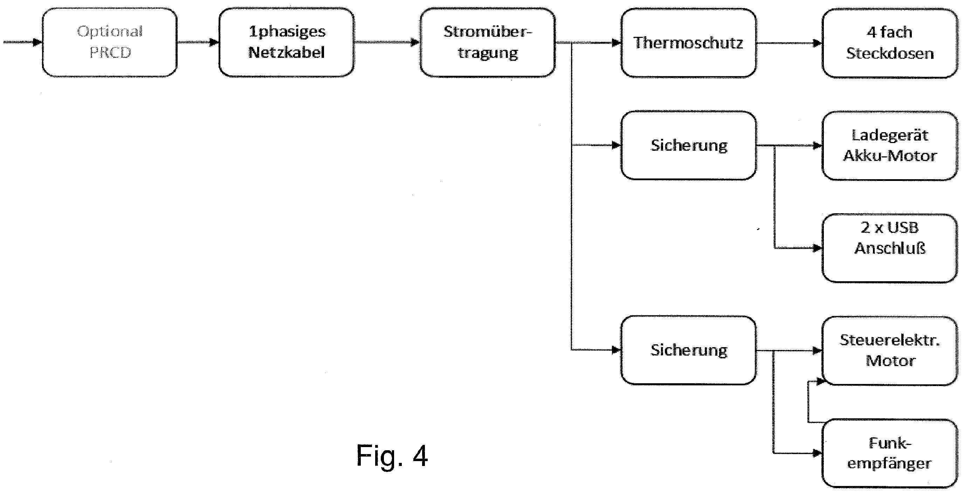

Fig. 4 zeigt ein Blockschaltbild mit einem Sicherheitssystem, das in einer bevorzugten Ausführungsform der erfindungsgemäßen Kabelaufrollvorrichtung vorgesehen ist. Das Sicherheitssystem umfasst als Grundelement ein 1-phasiges Netzkabel. Optional kann eine PRCD-s-(Portable Residual Current Device; S = safety) Einheit vorgesehen sein. Hierbei handelt es sich um eine ortsveränderliche Fehlerstrom-Schutzeinrichtung mit geschaltetem Schutzleiter. Über das Netzkabel erfolgt die Stromübertragung bzw. Drehdurchführung auf mehrere an einer Abzweigung parallel geschaltete Strompfade.

In einem ersten Pfad schließt sich ein Thermoschutz an, der die nachfolgend angeordneten 4-fach-Steckdosen vor thermischer Überlastung schützt.

Parallel zu dem Thermoschutz ist eine erste Sicherung für das nachgeschaltete Ladegerät des Motor-Akku sowie für einen 2xUSB-Anschluss angeordnet.

Weiterhin ist parallel zu dem Thermoschutz und der ersten Sicherung eine zweite Sicherung vorgesehen, welche die Steuerelektronik des Motors und gegebenenfalls einen Funkempfänger schützt.

Weitere Ausführungsformen, die nicht im Einzelnen erläutert werden, werden im Folgenden kurz zusammengefasst. So kann optional ein Zusatzgerät an dem Gehäuse aufgenommen werden, beispielsweise ein Fremdakku oder ein USB-Anschluss. Das Gehäuse ist im Kabelbereich vorzugsweise geschlossen und weist einen Laufschacht für das Kabel auf. Ergänzend oder alternativ zu dem Taster kann eine Fernbedienung oder eine durch Kabelzug betätigte Schaltvorrichtung für die Aktivierung des motorischen Aufwickelns des Kabels vorgesehen sein. Auch die Fernbedienung aktiviert den Antriebsmotor nur solange ein Schalter der Fernbedienung gedrückt wird. Eine integrierte Aufrolleinheit dient zum gleichmäßigen Wickeln des Netzkabels auf die Kabeltrommel. Das Gehäuse kann so geschlossen sein, dass es spritzwassergeschützt ist. Ferner kann das Gehäuse einen Deckel aufweisen, der eine Innenkammer, ein Ablagefach oder Anschlussfach abdeckt. Zweckmäßig ist das Gehäuse so ausgestattet, dass es an der Oberseite eine Ablagemöglichkeit bzw. eine Auflagefläche bietet. Darüber hinaus kann in dem Gehäuse der elektrischen Kabelaufrollvorrichtung eine Aufnahme für eine Ladestation für mögliche Power-Bank-Anwendungen bzw. eine Ladestation für Akku-Geräte vorgesehen sein.

### Bezugszeichen

- 1: 4-fach-Steckdosenplatte
- 2: Gehäuseschale rechts
- 3: Netzteil
- 4: Achsteil rechts
- 5: Kontaktsystem Gehäusekäfig rechts
- 6: Kontaktsystem Kontaktfedern
- 7: Kontaktsystem Schleifringe mit Gehäusekäfig links
- 8: Lagerring
- 9: Trommelscheibe rechts
- 10: Netzkabel mit Anschlusslitzen
- 11: Stauraum
- 12: Abdeckung
- 13: USB-Steckdosen
- 14: Deckel
- 15: Griff
- 16: Werkzeugakku
- 17: Ladebucht für Werkzeugakku
- 18: Scharnierzapfen
- 19: Gehäuseschale links
- 20: Achsteil links
- 21: Trommelscheibe links
- 22: Akku für elektrischen Rücklauf
- 23: Motor für elektrischen Rücklauf
- 24: Knopf für elektrischen Rücklauf
- 25: Gehäuse
- 26: erster Steckverbinder
- 27: Kabeltrommel

## Patentansprüche

1. Kabelaufrollvorrichtung zum Aufrollen eines Elektrokabels, insbesondere Netzkabels mit:
- einem Elektrokabel (10), das mit einem ersten elektrischen Steckverbinder (26) an seinem ersten Ende und einem zweiten elektrischen Steckverbinder (1) an seinem zweiten Ende elektrisch verbunden ist, und
- einer Kabeltrommel (9,21) zum Aufnehmen des Elektrokabels (10) als wenigstens eine Kabelwicklung,
**gekennzeichnet durch**
- ein Gehäuse (25) zur Drehlagerung der Kabeltrommel (9,21),
- einen elektrischen Antriebsmotor (23) zum Erzeugen einer Drehbewegung der Kabeltrommel (9,21) gegenüber dem Gehäuse (25) um eine Trommelachse (4, 20), und
- eine in dem Gehäuse (25) integrierte und über das Elektrokabel (10) gespeiste Stromversorgung (22,33) für den Antriebsmotor (23).

2. Kabelaufrollvorrichtung nach Anspruch 1, **dadurch gekennzeichnet, dass** die Stromversorgung (22,33) einen in dem Gehäuse (25) eingebauten Akku (22) aufweist.

3. Kabelaufrollvorrichtung nach Anspruch 2, **dadurch gekennzeichnet, dass** die Stromversorgung (22,33) eine in dem Gehäuse (25) angeordnete Ladeelektronik (33) aufweist, und dass die Ladelektronik (33) mit dem ersten Steckverbinder (26) und mit dem Akku (22) elektrisch verbunden oder verbindbar ist.

4. Kabelaufrollvorrichtung nach einem der vorangehenden Ansprüche, **dadurch gekennzeichnet, dass** das Elektrokabel (10) über ein insbesondere durch Schleifkontakte gebildetes bewegliches Kontaktsystem (6,7) mit dem zweiten elektrischen Steckverbinder (1) elektrisch verbunden ist.

5. Kabelaufrollvorrichtung nach Anspruch 4, **dadurch gekennzeichnet, dass** die Stromversorgung (22,33) für den Antriebsmotor (23) einen zwischen dem Kontaktsystem (6,7) und dem zweiten elektrischen Steckverbinder (1) abzweigenden Strompfad (38) aufweist.

6. Kabelaufrollvorrichtung nach einem der vorangehenden Ansprüche, **dadurch gekennzeichnet, dass** die Kabeltrommel (9,21) eine stirnseitige Trommelscheibe (9) aufweist, und dass der Antriebsmotor (23) mit der Trommelscheibe (23) vorzugsweise über ein Zahnradgetriebe gekoppelt ist.

7. Kabelaufrollvorrichtung nach einem der vorangehenden Ansprüche, **dadurch gekennzeichnet, dass** der Antriebsmotor (23) über einen Taster (24) betätigbar ist, und dass der Taster (24) an dem Gehäuse (25) angeordnet ist.

8. Kabelaufrollvorrichtung nach einem der vorangehenden Ansprüche, **dadurch gekennzeichnet, dass** der Antriebsmotor (23) über eine Fernbedienung betätigbar ist, welche eine Funktion als Taster übernimmt.

9. Kabelaufrollvorrichtung nach einem der vorangehenden Ansprüche, **gekennzeichnet durch** eine integrierte Aufrolleinheit zum gleichmäßigen Wickeln des Elektrokabels (10) auf die Kabeltrommel (9,21) .

10. Kabelaufrollvorrichtung nach einem der vorangehenden Ansprüche, **dadurch gekennzeichnet, dass** der zweite Steckverbinder (1) mit einem integrierten Thermo-Schutzschalter gesichert ist.

11. Kabelaufrollvorrichtung nach einem der vorangehenden Ansprüche, **gekennzeichnet durch** einen integrierten USB-Anschluss (13) zum Laden von Mobilgeräten.

12. Kabelaufrollvorrichtung nach einem der vorangehenden Ansprüche, **gekennzeichnet durch** wenigstens eine in dem Gehäuse (25) integrierte Ladestation (17) für Akku-Geräte.
